# EUROPÄISCHE PATENTANMELDUNG

(11) **EP 2 369 393 A1**
(43) Veröffentlichungstag der Anmeldung: **28.09.2011**
(21) Anmeldenummer: 11002482.5
(22) Anmeldetag: 25.03.2011
(51) Int. Cl.: G02B 17/08, F21V 5/04

(54) **Lichtbrechungsvorrichtung**

(30) Priorität: 25.03.2010 DE 102010012824
(71) Anmelder: Inlight GmbH & Co. KG, 46539 Dinslaken (DE)
(72) Erfinder: Scharpenberg, Wolfgang, 46562 Voerde (DE)
(74) Vertreter: Demski, Siegfried

(57) **Zusammenfassung**

Die Erfindung betrifft eine Lichtstreuvorrichtung 1 zur Brechung von Licht für LED's zur Ausleuchtung einer Fläche, insbesondere eines Fluchtweges, umfassend zumindest eine LED, die in einem Formkörper 3 aufgenommen und mit Spannung beaufschlagbar ist. Um eine Fläche direkt auszuleuchten, ohne auf einen Reflektor zurückgreifen zu müssen, wird erfindungsgemäß vorgeschlagen, dass die Lichtbrechung aus einem Formkörper 3 besteht, in dessen Focus mindestens eine LED aufgenommen ist, die Licht in den Formkörper 3 emittiert, wobei durch zumindest eine an den Randflächen des Formkörpers 3 auftretende Lichtbrechung eine homogene Ausleuchtung einer begrenzten festlegbaren Fläche erfolgt,

## Beschreibung

Die Erfindung betrifft eine Lichtbrechungsvorrichtung für LED's zur Ausleuchtung einer Fläche, insbesondere eines Fluchtwegs, umfassend zumindest eine LED, die im Focus eines Formkörpers aufgenommen, mit Spannung beaufschlagbar ist und Licht in den Formkörper emittiert.

Allgemein erfolgt durch Brechung an einem Material eine Richtungsänderung einer elektromagnetischen Welle. So wird beispielsweise ein Lichtstrahl an einem Hindernis, wie einem Spalt, Gitter oder Linsenrand zum Lot des Hindernisses oder vom Lot des Hindernisses weg gebrochen. Von der Brechung ist die Beugung und Streuung zu unterscheiden. Bei der Beugung erfolgt eine Ablenkung elektromagnetischer Strahlung an einem Hindernis was zu Interferenzmustern führen kann. Unter Streuung versteht man die Ablenkung beispielsweise elektromagnetischer Strahlung an einem Objekt, wobei Objekt und Strahlung miteinander wechselwirken. Demgegenüber bezeichnet man mit Brechung lediglich die Richtungsänderung, die ein Lichtstrahl erfährt, wenn er unter einem bestimmten Winkel in ein optisch anderes Medium mit einer anderen Dichte eintritt.

Es sind verschiedene Vorrichtungen bekannt, um eine Brechung von Licht zu bewirken, wobei insbesondere die Anwendungsbereiche von Prismen, Linsen, Mikroskopen und die Diffraktometrie mit Laserlicht zu nennen sind. Soll daher eine vollständige und gleichmäßige Ausleuchtung einer Fläche mit Hilfe einer Lichtbrechungsvorrichtung erfolgen, so ist zu gewährleisten, dass keine Beugungseffekte auftreten und Wechselwirkungen mit einem Streuzentrum vermieden werden. Um eine vollständige und gleichmäßige Ausleuchtung eines Flächenbereiches zu gewährleisten, ist man daher darauf angewiesen eine wechselwirkungs- und interferenzfreie Ablenkung elektromagnetischer Strahlung an einem Hindernis zu gewährleisten.

Aus der DE 10 2006 016 21 A1 ist die Ausleuchtung einer Fläche über einen Reflektor durch Streuung ausgehend von einer Lichtquelle bekannt, bei der eine Fläche ausgeleuchtet wird, die über eine LED mit Linse und einem Reflektor angestrahlt wird. In der Druckschrift ist offenbart, wie eine LED einen Lichtstrahl aussendet, der an einem Reflektor gestreut wird, wobei ein Lichtkegel entsteht, der zur Ausleuchtung einer Fläche genutzt werden kann. Vor einer LED ist eine Linse angeordnet, die einem Reflektor gegenüber liegt. Über die LED und die Linse wird nach Spannungszufuhr ein Lichtkegel ausgesendet, der reflektiert wird und eine Streuung des einstrahlenden Lichtes in einen Winkel zwischen 10° und 80° ermöglicht. Allerdings ist eine Streuung des eingestrahlten Lichtes über eine direkte Ansteuerung einer Linse von einer dahinter liegenden Lichtquelle in der Druckschrift nicht offenbart. Ein Nachteil bei dem offenbarten Beleuchtungsgegenstand ist, dass eine genaue Justierung des Reflektors zur Steuerung des Streuwinkels erforderlich ist. Zudem ist ein hoher Materialaufwand zur Herstellung der Vorrichtung erforderlich, wodurch die Herstellung verteuert wird.

Aufgabe der Erfindung ist es daher, die Nachteile des Standes der Technik zu überwinden und eine Vorrichtung zu entwickeln, bei der eine direkte Ausleuchtung einer Fläche erfolgen kann, ohne auf einen Reflektor zurückgreifen zu müssen oder eine gesonderte Einstellung des Emissionswinkels einer Lichtquelle vornehmen zu müssen.

Die erfindungsgemäße Aufgabe wird dadurch gelöst, dass durch eine an den Randflächen des Formkörpers auftretende Lichtbrechung eine homogene Ausleuchtung einer begrenzten, festlegbaren Fläche erfolgt und der Formkörper eine Ausnehmung für eine LED sowie spiegelsymmetrische Seitenkonturen aufweist, welche zumindest teilweise parabolisch geformt sind. Weitere vorteilhafte Ausgestaltungen des Erfindungsgegenstandes ergeben sich aus den Unteransprüchen.

Die erfindungsgemäße Vorrichtung besteht aus einem Formkörper, in welchen eine LED eingelassen ist. Der Formkörper Ist dabei vollständig aus einem kristallinen oder amorphen Material aufgebaut, der den gesamten Formkörper ausbildet. Als Materialien können beispielsweise transparente Kunststoffe, wie PVC, PP, PMMA, PE und PC verwendet werden. Auch ist auch eine Verwendung von Glas als Formkörpermaterial möglich. Die LED ist dabei nahezu vollständig von mindestens einem der beispielhaft genannten Materialien umgeben. Durch eine Ausnehmung im Formkörper ist die LED derart in den Formkörper integrierbar, dass eine Emission der von der LED ausgehenden Strahlung vollständig in das Material des Formkörpers gelangt und nach dessen Durchdringung an den Rändern gebrochen wird. Die Form der Ausnehmung und Ihre Größe sind dabei variabel, sodass je nach Art des Materials des Formkörpers, der LED-Form und der Ausleuchtungsfläche verschieden groß geformte Ausnehmungen Innerhalb des Formkörpers gewählt werden können.

Neben seiner Funktion als Aufnahme für eine LED ist der Formkörper so ausgestaltet, dass je nach Wahl des Formkörpermaterials eine Brechung des ausgesendeten Lichts von der LED zumindest an den Randflächen des Formkörpers erfolgen kann. Durch die Anordnung einer LED beispielsweise im Fokus des Formkörpers besteht die Möglichkeit eine genaue anisotrope Emission von Strahlung in einen Bereich jenseits des Formkörpers zu lenken, um eine gleichmäßige homogene Ausleuchtung einer Fläche zu gewährleisten. Der Formkörper ist dabei so gestaltet, dass die gewählten Winkel an den Randflächen des Formkörpers eine anisotrope Emission von Strahlung ermöglichen. Der Formkörper weist dabei zumindest zwei spiegelsymmetrisch angeordnete parabelförmige Seitenkonturen auf, die gegenüber der LED-Mittelachse im Formkörper einen Winkel von bis zu 90 ° einnehmen. Die der LED-Ausnehmung gegenüber liegende Randfläche ist zumindest teilweise parabolisch ausgebildet, wobei der Scheitelpunkt der parabolischen Randfläche sich mit der Längsmittelachse der LED schneidet und der Formkörper randseitig in eine konkave Krümmung übergeht. Es Ist jedoch auch denkbar, dass der Formkörper an den Randflächen eine konvexe Krümmung aufweist. Ob der Formkörper Randflächen aufweist, die konkav oder konvex ausgestaltbar sind, richtet sich danach, welche Flächenbereiche ausgeleuchtet werden sollen. Durch eine variable konvexe oder konkave Ausgestaltung der Randflächen Formkörpers ist eine anisotrope Lenkung des emittierten Lichts in einem Flächenbereich möglich, der eine homogene Ausleuchtung gewährleistet.

Die der LED-Ausnehmung zugewandten Seite des Formkörpers kann eine ebene oder gekrümmte Form aufweisen. Die Form richtet sich dabei nach den Anforderungen, die an den Formkörper gestellt werden, um einen Anschluss der LED innerhalb des Formkörpers und eine Befestigung der LED sowie des Formkörpers selbst zu gewährleisten.

In besonderer Ausgestaltung des Erfindungsgegenstandes soll eine homogene Ausleuchtung eines Fluchtweges erfolgen, wobei eine gerichtete Brechung und Streuung des Lichtes entlang einer lang gestreckten Fläche erfolgt. Durch die vorliegende Erfindung wird gewährleistet, dass eine homogene und gleichmäßige Beleuchtungsstärke entlang einer Fluchtwegmarkierung erfolgt. Dies ist von besonderem Vorteil, weil somit Personen, die in einem Gefahrenfall einen Fluchtweg beschreiten müssen, eine zielgerichtete Orientierung durch die homogene Ausleuchtung erfahren. Wird nämlich eine LED in einem Formkörper integriert, der keine entsprechend gewählte Ausgestaltung des Formkörpers aufweist, so nimmt die Ausleuchtung des Fluchtweges mit zunehmender Entfernung von der Lichtquelle ab. Dadurch erscheinen bestimmte Bereiche eines Fluchtweges heller oder dunkler, wodurch die Orientierung einer flüchtenden Person erschwert wird. Durch die besondere Ausgestaltung des Formkörpers wird jedoch eine homogene Ausleuchtung des Fluchtweges gewährleistet, wobei die Beleuchtungsstärke über den gesamten Bereich des auszuleuchtenden Fluchtweges konstant bleibt.

Je nach den Anforderungen des auszuleuchtenden Bereiches wird der Formkörper so geformt, dass durch die Lichtbrechung die betreffende Fläche homogen ausgeleuchtet wird. Hierbei kann es sich um eine rechteckförmige oder gewölbte Fläche handeln, beispielsweise zur Ausleuchtung eines Fluchtweges, eines Ganges oder dergleichen, welche die von der erfindungsgemäßen Lichtvorrichtung ausgeleuchtet wird. Je nachdem was für eine betreffende Fläche ausgeleuchtet werden soll, weisen die Seitenkonturen des Formkörpers gegenüber der LED-Mittelachse einen Neigungswinkel von 10° bis 85° auf. So ist es insbesondere für eine Fluchtwegausleuchtung eine parabelförmige Außenkontur mit besonders großen Neigungswinkeln des Formkörpers zu wählen, wobei mindestens zwei Seitenkonturen des Formkörpers spiegelsymmetrisch ausgebildet und die zumindest teilweise parabolisch geformt sind. Durch eine solche parabolische Form erstreckt sich der Bereich der Ausleuchtung über eine Fläche, die annähernd rechteckig mit einer unterschiedlichen Kantenlänge ist. Es besteht jedoch die Möglichkeit jede beliebige Fläche durch den Formkörper auszuleuchten, wie beispielsweise gekrümmte Flächen. Dies kann durch die Änderung des Neigungswinkels innerhalb des Formkörpers gewährleistet werden. Dies hat insbesondere den Vorteil, dass eine Lichtbrechungsvorrichtung nicht zwangsläufig nach der auszuleuchtenden Flächenform ausgerichtet werden muss, sondern die Form des Formkörpers selbst eine homogene Ausleuchtung einer betreffenden Fläche gewährleistet. Damit wird eine exakte Justierung der Lichtbrechungsvorrichtung relativ zur auszuleuchtenden Fläche überflüssig und die Lenkung des Lichts in eine auszuleuchtende Fläche ist lediglich abhängig von der Wahl der Neigungswinkel und der Kontur des Formkörpers.

Zur Ausleuchtung eines Fluchtweges ist notwendig, dass eine Totalreflexion des Lichtes partiell innerhalb des Formkörpers ausgeschlossen ist und eine konvergente Anisotropie des Lichtes in die auszuleuchtende Fläche durch Brechung an den Randflächen des Formkörpers mit derselben Lichtleistung erfolgt. Geht man davon aus, dass ein Lichtstrahl der aus einem optisch dichteren Material kommt, an der Grenzfläche auf ein dünneres Material stößt, so wird der Lichtstrahl gemäß dem snelliusschen Brechungsgesetz vom Einfallslot weggebrochen, wobei der Berechungswinkel größer ist als der Einfallswinkel des Lichtes. Wird der Einfallswinkel vergrößert, so verläuft ein Lichtstrahl ab einem bestimmten Winkel parallel zur Grenzfläche zwischen optisch dichterem Material und optisch dünnerem Material. Ab einem Einfallswinkel, der größer als der Brechungswinkel ist, kann der Strahl aus dem optisch dichteren Material daher nicht mehr in das optisch dünnere Material übertreten. Anstelle dessen wird der gebrochene Stahl vollständig an der Grenzfläche zwischen dichteren und dünneren Material reflektiert.

In der erfindungsgemäßen Ausgestaltung des Formkörpers ist die Kontur des Formkörpers so gewählt, dass der Einfallswinkel in den Bereichen des Formkörpers größer als der Grenzwinkel der Totalreflexion ist, sodass ein Übertritt des Lichtstrahls aus dem optisch dichterem Material in das optisch dünnere Material ermöglicht wird. Um eine lang gestreckte Fläche auszuleuchten, wie Sie insbesondere bei Fluchtwegen vorliegt, ist es notwendig, Bereiche innerhalb des Formkörpers zu schaffen, die einen Durchtritt eines Lichtstrahls aus dem optisch dichteren Medium (Formkörper) in das optisch dünnere Medium (Luft) ermöglichen und damit eine Ausleuchtung einer begrenzten Fläche gewährleisten und andererseits Bereiche zu schaffen, die einer Totalreflexion unterliegen. Die Bereiche in denen ein Lichtstrahl durch das dichtere Material treten soll, werden in Abhängigkeit von der auszuleuchtenden Fläche gewählt, sodass die Einfallswinkel für den Lichtstrahl an den Randflächen des Formkörpers einen Wert annehmen, der größer ist als die Grenzwinkel der Totalreflexion. Wird somit ein Strahl innerhalb des Formkörpers total reflektiert, so wird er innerhalb des Formkörpers auf eine Fläche treffen, die einen Brechungswinkel größer oder kleiner als der Grenzwinkel für die Totalreflexion aufweist. Für den Fall, dass der Grenzwinkel kleiner ist als der Einfallswinkel, so erfolgt ein Durchtritt des Lichtstrahls aus dem optisch dichteren Medium in das optisch dünnere Medium und damit eine Emission des Lichtes aus dem Formkörper. Für den Fall, dass der Einfallswinkel größer als der Grenzwinkel der Totalreflexion ist, erfolgt eine erneute Totalreflexion am Randbereich des Formkörpers, und zwar so lange bis ein reflektierter Lichtstrahl auf eine Randfläche des Formkörpers trifft, bei dem der Brechungswinkel größer ist als der Einfallswinkel des Lichtes. In einem solchen Fall erfolgt dann ein Durchtritt des Lichtstrahles aus dem optisch dichteren Medium in das optisch dünnere Medium. Da die Brechung im Falle einer Totalreflexion innerhalb des Formkörpers in Form einer elastischen Streuung erfolgt, ist die Lichtleistung bei Austritt des Lichtstrahls an den lateralen Randflächen des Formkörpers genau so groß, wie bei einem Austritt eines Lichtstrahls aus dem zentralen Bereich. Damit ist insgesamt die Beleuchtungsstärke auf der begrenzten Fläche überall gleich groß, sodass die Ausleuchtung der festlegbaren Fläche homogen ist. Die Beleuchtungsstärke soll dabei auf der auszuleuchtenden Fläche zwischen einem und drei Lux liegen, was jedoch nur beispielhaft angenommen wird, da die Beleuchtungsstärke von der Art der gewählten LED-Strahlungsquelle abhängt und eine größere Beleuchtungsstärke möglich ist, wenn eine LED mit höherer Leistung in der erfindungsgemäßen Lichtbrechungsvorrichtung verwendet wird. Erfindungswesentlich bleibt jedoch unabhängig von der Stärke der LED eine Beleuchtungsstärke, welche vorzugsweise zwischen ein bis drei Lux liegen soll, wobei eine homogene Ausleuchtung einer betreffenden Fläche gewährleistet wird.

Zur homogenen Ausleuchtung eines Fluchtwegs mit Kantenlängen a»b ist es notwendig, die radialen und axialen Winkel innerhalb des Formkörpers in einem Verhältnis von 1 zu 40 zu wählen. Das unterschiedliche Verhältnis der Winkel innerhalb des Formkörpers ergibt sich aus der Art der Ausleuchtungsfläche, da eine Totalreflexion des einfallenden Lichtes innerhalb des Formkörpers in Bereichen auftreten muss, die nicht für den Durchtritt von Lichtstrahlen vorgesehen sind. Damit die Einfallswinkel an den tangentialen Randflächen des Formkörpers kleiner sind als in den axialen Randflächen ist die Krümmung an den Randflächen des Formkörpers so zu wählen, dass der Lichtstrahl mit einem Einfallswinkel größer als der Brechungswinkel auf die Randflächen des Formkörpers auftritt, um eine gerichtete Ausleuchtung einer Fläche zu gewährleisten.

Soll daher eine Ausleuchtung einer annähernd rechteckigen Fläche, wie die eines Fluchtwegs erfolgen, so müssen die tangentialen Randflächen des Formkörpers eine Krümmung aufweisen, bei dem der Einfallswinkel für einen auftreffenden Lichtstrahl kleiner ist als der Brechungswinkel. Dies ist deswegen erforderlich, um einen anisotropen Durchtritt von Licht auf die auszuleuchtende Fläche zu gewährleisten und eine diffuse Emission von Licht aus dem Formkörper zu verhindern. Ist der Einfallswinkel größer als der Brechungswinkel, so wird durch die damit verbundene Totalreflexion der Lichtstrahl innerhalb des Formkörpers zurückreflektiert und ein Durchtritt von Licht aus dem Formkörper hinaus findet nicht statt. Die Reflexion des Lichts erfolgt daher im Fall der Totalreflexion innerhalb des Formkörpers, solange bis der Lichtstrahl auf eine Randfläche des Formkörpers trifft, der eine Krümmung aufweist, die kleiner ist als der Grenzwinkel der Totalreflexion. Ist also an einigen Randflächen des Formkörpers eine Emission von Licht gefordert und gewünscht, so müssen die zu wählenden Winkel an den entsprechenden Randflächen so gewählt werden, dass die Grenze des Winkels der Totalreflexion nicht überschritten wird. Durch eine entsprechende Wahl der Krümmung kann eine solche Winkelanordnung gewährleistet werden. Daher ist die erfindungsgemäße Vorrichtung so geformt, dass die Randflächen des Formkörpers gegenüber der Emissionsquelle eine Winkelanordnung aufweisen, die eine Totalreflexion des emittierten Lichts verhindern, während andere Bereiche eine Totalreflexion gewährleisten und umgekehrt. Um eine möglichst große Zahl von Lichtstrahlen in den betreffenden Bereich der auszuleuchtenden Fläche zu lenken, ist es notwendig das Verhältnis der Einfallswinkel innerhalb des Formkörpers an den Randflächen an denen keine Totalreflexion erfolgen soll, gegenüber den Randflächen, an denen eine Totalreflexion erfolgen soll sehr groß zu wählen. Typischer Weise weist daher das Verhältnis von radialen und tangentialen Winkel für die Ausleuchtung eines rechtwinkligen Fluchtwegs ein Verhältnis von 1 zu 40 auf.

Zur Ausleuchtung einer Fläche, insbesondere eines Fluchtweges, ist die der LED-Aufnahme gegenüberliegende Randfläche daher zumindest teilweise parabolisch ausgebildet, wobei der Scheitelpunkt der parabolischen Randfläche sich mit der Längsmittelachse der LED schneidet und der Formkörper randseitig in eine annähernd konkave oder konvexe Krümmung übergeht. Der Formkörper weist insofern auf seiner der LED-Aufnahme gegenüberliegenden Randfläche einen annähernd konvexen oder konkaven Bereich mit einem relativen Minimum auf, welcher in der Verlängerung der Längsmittelachse der LED liegt. Weiterhin weisen die radial liegenden randseitigen Bereiche des Formkörpers zwei annähernd konkave oder konvexe Krümmungen auf, die als Wendepunkte des Randflächenverlaufs anzusehen sind.

Durch diese besondere Ausgestaltung des Formkörpers wird gewährleistet, dass eine Brechung des Lichtes in Bezug auf eine rechtwinklige Fläche homogen und mit der gleichen Beleuchtungsstärke erfolgt. Die von der LED emittierten Lichtstrahlen werden an den Randflächen des Formkörpers so gebrochen, dass eine auszuleuchtende Fläche unmittelbar unterhalb der Lichtquelle die gleiche Beleuchtungsstärke aufweist, wie in den Randbereichen der auszuleuchtenden Fläche. Da bei einer Brechung der Impuls der Wellenbewegung nicht verändert wird, ist die Intensität der einfallenden Strahlung auf die auszuleuchtende Fläche überall gleichgroß. Für die Ausleuchtung einer Fläche, die als Fluchtweg Verwendung finden soll, ist dies entscheidend, weil somit einer Person eine Orientierung entlang eines Fluchtweges ermöglicht wird, ohne dass eine Blendung oder Fokussierung auf eine bestimmte, durch eine besonders starke Ausleuchtung hervortretende Stelle, erfolgt. Dadurch hat eine flüchtende Person die Möglichkeit eine sich fortsetzende Strecke mit kontinuierlicher Ausleuchtung zu verfolgen, ohne die in der Regel an den Fluchtwegen angebrachten Kennzeichnungen aufgrund unterschiedlicher Beleuchtungsstärke aus den Augen zu verlieren.

Soll daher ein Fluchtweg ausgeleuchtet werden, so ist es erforderlich im Randbereich des Formkörpers einen Einfallswinkel des Lichtes zu wählen, der unterhalb des Grenzwinkels der Totalreflexion liegt, wo hingegen in Bereichen in denen keine Abstrahlung von Licht gewünscht wird, der Formkörper so zu gestalten ist, dass eine Totalreflexion innerhalb des Formkörpers erfolgt und eine diffuse Abstrahlung von Licht vermieden wird. Typischer Weise ist für einen Übergang von Licht aus einem Material wie PC, PMMA, PE und PP ein Grenzwinkel von 42° anzunehmen. Durch die Wahl des Grenzwinkels der Totalreflexion als bestimmende Größe für die Ausleuchtung einer Fläche ist es somit möglich in Abhängigkeit von der Materialbeschaffenheit des Formkörpers eine Fläche zu beleuchten, ohne diffuse oder inhomogene Lichtbereiche zu erzeugen.

Weiterhin ist in festzustellen, dass neben der Wahl des geeigneten Grenzwinkels auch die Anordnung der LED innerhalb des Formkörpers Einfluss auf die Form der auszuleuchtenden Fläche nimmt. So erfolgt bei Verlagerung der LED längs der Parabelachse des Formkörpers eine Korrektur des Brennpunktes der Lichtstrahlen und damit eine Veränderung der ausgeleuchteten Flächenform. Je nachdem wie weit die LED entlang der Parabelachse des Formkörpers aus dem Focus herausbewegt wird, erfolgt eine Änderung der Lichtemission. Der auszuleuchtende Flächenbereich wird bei einer Verlagerung der LED in lateraler Richtung verjüngt, wenn die Form des Formkörpers beibehalten wird. Ob allerdings eine Verschmälerung oder Verbreiterung des eingestrahlten Flächenbereichs erfolgt, hängt weiterhin davon ab, wie die Randflächen des Formkörpers ausgestaltet sind. So wird bei einer Verlagerung der LED aus dem Focus und konvexer Ausgestaltung des Randbereichs des Formkörpers eine Verschmälerung der auszuleuchtenden Fläche erfolgen, während bei einer konkaven Ausgestaltung der Randflächen bei lateraler Verlagerung einer LED entlang der Parabelachse die auszuleuchtende Fläche verbreitert wird.

In einer weiteren vorteilhaften Ausgestaltung ist vorgesehen, einen Formkörper und/oder die Leuchtdiode manuell oder elektromotorisch schwenkbar auszugestalten. Ohne Verschwenkbarkeit ist die Art der betreffenden auszuleuchtenden Fläche durch die Kontur des Formkörpers festgelegt, Soll eine Veränderung der Ausleuchtung der Fläche erfolgen, so ist dies nur durch eine Veränderung des Formkörpers selbst möglich. Allerdings kann durch eine Schwenkung wie beispielsweise durch Rotation oder Neigung des Formkörpers die Position der auszuleuchtenden Fläche verändert werden. Eine erfindungsgemäße Lichtbrechungsvorrichtung kann je nach Anforderungen eine Steuereinheit aufweisen, wodurch der Formkörper gedreht oder geschwenkt wird. Es ist damit möglich die Orientierung der Ausleuchtungsfläche zu verändern und damit eine variable Einstellung der Ausleuchtungsfläche zu gewährleisten. Die Drehung beziehungsweise Verschwenkung der Lichtbrechungsvorrichtung kann elektrisch oder manuell und hauptsächlich in einer radialen Bewegung um das Zentrum der Längsachse der LED-Aufnahme des Formkörpers, erfolgen. In einer weiteren Ausführungsform kann auch die Leuchtdiode innerhalb des Formkörpers schwenkbar ausgestaltet sein, sodass eine Veränderung der Position der Leuchtdiode innerhalb des Formkörpers erfolgen kann. Ein Teil der von der LED ausgehenden Strahlung trifft damit an den Randflächen des Formkörpers unter einem anderen Winkel auf, sodass sich der Bereich der Totalreflexion innerhalb des Formkörpers verschiebt. Damit wird ein anderes flächenmäßiges Ausleuchtungsmuster erzielt, sodass auch eine Veränderung der Form der Ausleuchtungsfläche durch eine Veränderung der Position der LED im Formkörper selbst erfolgt. Im Allgemeinen ist jedoch eine Bewegung um die in der Verlängerung der Längsachse des Formkörpers liegende LED-Aufnahme vorgesehen, sodass sich die Form der Ausleuchtungsfläche nicht verändert. Es verändert sich damit lediglich die Position der ausgeleuchteten Fläche durch Schwenkung bzw. Rotation des Formkörpers.

Weiterhin ist vorgesehen, dass der Formkörper aus verschiedenen Materialien bestehen kann, beispielsweise aus PMMA, PC, PP, PE und PVC, um einige zu nennen. Es kann auch ein amorphes Material gewählt werden, solange es die Anforderungen einer notwendigen Transparenz erfüllt und keine Absorption des Lichtes innerhalb des Formkörpers erfolgt. Daher ist es auch denkbar, dass der Formkörper aus Glas besteht sowie aus glasähnlichen Kunststoffen, wie beispielsweise Borcarbid oder Siliziumnitrit (BN₃ bzw. Si₃ N₄). Die Wahl des Materials des Formkörpers richtet sich nach dem Einsatzzweck und dem Einsatzort, wobei die vorgenannten Materialien lediglich beispielhaft genannt sind und keine abschließende Materialauswahl widerspiegeln sollen.

Der Formkörper weist weiterhin zur Befestigung einen Bereich auf, der an Unterseite liegt und eine Befestigung an einer Oberfläche ermöglicht. Eine Befestigung kann durch Festklemmen, Verschrauben, Verkleben, Verschweißen, etc. erfolgen. Auch ist es denkbar, dass die Lichtbrechungsvorrichtung und/oder die LED an einem Gehäuse befestigt wird, aus dem nur ein Teil der Lichtbrechungsvorrichtung herausschaut, sodass die Befestigung nicht unmittelbar an dem Formkörper selbst erfolgt, sondern über das Gehäuse eine Befestigung der erfindungsgemäßen Lichtbrechungsvorrichtung. Auch ist es denkbar, dass der Formkörper und/oder die Befestigungselemente über ein Gewinde verfügen, sodass der Formkörper in ein Gehäuse eingedreht oder an einer Oberfläche befestigt werden kann. Die vorgenannten Befestigungsmöglichkeiten des Formkörpers sind jedoch nur beispielhaft genannt und stellen keine abschließende Möglichkeit einer Befestigung dar.

Die Erfindung wird im Weiteren anhand der Figuren näher erläutert.

Es zeigt
- Fig. 1: die erfindungsgemäße Lichtbrechungsvorrichtung in einer perspektivischen Unteransicht
- Fig. 2: die erfindungsgemäße Lichtbrechungsvorrichtung in einer perspektivischen Draufsicht,
- Fig. 3: die erfindungsgemäße Lichtbrechungsvorrichtung in einer Seitenansicht,
- Fig. 4: die erfindungsgemäße Lichtbrechungsvorrichtung in einer Unteransicht und
- Fig. 5: die erfindungsgemäße Uchtbrechungsvorrichtung in einem Querschnitt

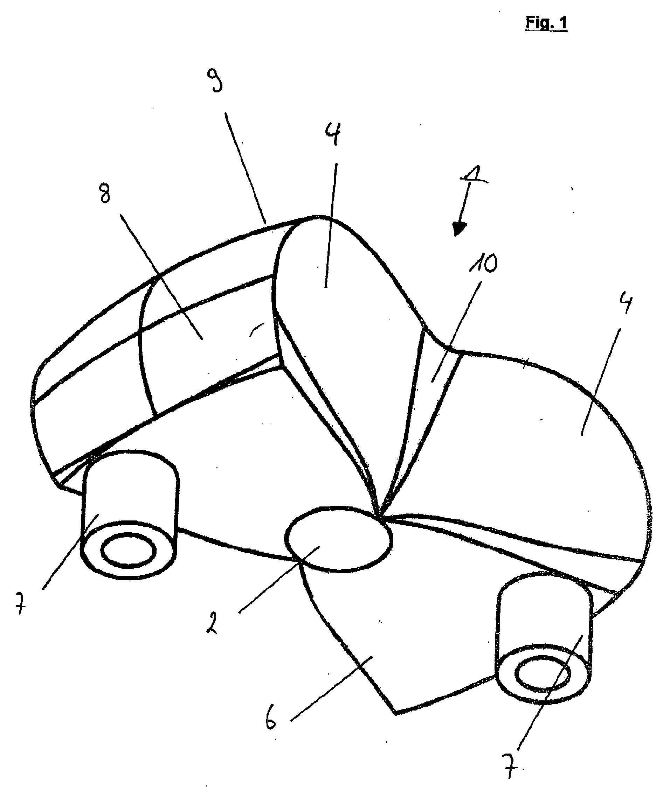

Figur 1 zeigt eine erfindungsgemäße Lichtstreuvorrichtung 1, die einen annähernd parabolischen Aufbau aufweist. In Figur 1 ist ein Formkörper 3 dargestellt, der aus einer Unterseite 6, einer Oberseite 9 und zwei Seitenkonturen 4 besteht. Die Unterseite 6 ist eben ausgebildet, wobei in ihrem Mittelpunkt eine Ausnehmung 2 vorhanden ist, die zur Aufnahme einer LED im Formkörper 3 vorgesehen ist. Die Ausnehmung 2 ist dabei in bevorzugter weise kegelstumpfförmig ausgebildet. Auf der Unterseite 6 befinden sich zudem zwei an den diagonal einander gegenüberliegende Ecken der Unterseite 6 Befestigungselemente 7, mit denen der Formkörper 3 an eine Oberfläche (nicht dargestellt) festlegbar ist. Die Befestigungselemente 7 sind hohlzylindrisch aufgebaut und sind einstückig mit der Unterseite 6 des Formkörpers 3 verbunden.

Die Unterseite 6 des Formkörpers 3 weist in ihrer Gesamtbetrachtung die Form eines annähernd konkaven Trapezes auf, wobei eine Symmetrieebene 10 vorhanden ist, die axial parallel durch den Mittelpunkt der Längsmittelachse 5 der Ausnehmung 2 verläuft. Während die radialen Randflächen der Unterseite 6 einen beidseitigen, konkaven Verlauf zeigen, sind die axialen Randflächen durch einen beidseitigen, parabolischen Verlauf gekennzeichnet, wobei im Bereich des Mittelpunkts der Längsmittelachse 5 der Ausnehmung 2, zwei relative Minima den axialen Randflächenverlauf der Unterseite 6 begrenzen. Die Form der Unterseite 6 des Formkörpers 3 ähnelt daher am ehesten einer schmetterlingsförmigen Fläche, die im Bereich der sich axial gegenüberliegenden Seiten im Mittelpunkt der Ausnehmung 2 verjüngt ist und an den radialen Randflächen eine konkave Krümmung aufweist.

Weiterhin schließt sich an die Unterseite 6 des Formkörpers 3 in axialer Richtung, die Seitenkontur 4 an. Die Seitenkontur 4 ist dabei durch einen annähernd parabolischen Kurvenverlauf gegenüber der Unterseite 6 und der Oberseite 9 gekennzeichnet. Der Kurvenverlauf weist senkrecht zum Mittelpunkt der Längsmittelachse 5 der Ausnehmung 2 eine Symmetrieebene 10 auf, wodurch die Oberfläche der Seitenkontur 4 in zwei annähernd symmetrische Randflächen geteilt ist. Es sind zwei Wendepunkte als Begrenzung zur Oberseite 9 im radial, randseitigen Bereich des annähernd parabolischen Randflächen zu erkennen. Durch die spiegelsymmetrische Form der Symmetrieebene 10 (nur eine Seitenkontur 4 dargestellt) weist die Seitenkontur 4 eine annähernd konvexe Form auf, die durch die ebene, horizontale Unterseite 6 und die parallelförmige Oberseite 9 begrenzt wird.

Die Oberseite 9 des Formkörpers kann als ein annähernd hyperbolisches Paraboloid beschrieben werden, die auch als Sattelfläche des Formkörpers 3 bezeichnet werden kann. Die Sattelfläche ist antiklastisch gekrümmt, dass heißt der Krümmungsgrad ist negativ. Durch die negative Krümmung 8 ist festgelegt, dass die Oberseite 9 im Bereich der radial randseitigen Krümmung 8 zur Unterseite 6 eine konkave Form aufweist. Man kann daher den Flächenverlauf der Oberseite 9 annähernd dadurch beschreiben, dass im Bereich des Scheitelpunkts der Längsmittelachse 5 der Ausnehmung 2 ein lokales Minimum vorhanden ist. In diesem Bereich ist auch eine Symmetrieebene 10 vorhanden, die in axialer Richtung, senkrecht zur Längsmittelachse 5 der Ausnehmung 2 verläuft. Der Verlauf der Oberfläche der Oberseite 9 ist daher in zwei symmetrische Bereiche unterteilt, die jeweils einen radialen Wendepunkt aufweisen und im randseitigen Bereich in eine radiale Krümmung 8 übergehen. Die Krümmung 8 grenzt in radialer Richtung an die Unterseite 6 des Formkörpers 3. In axialer Richtung bildet die Oberseite 9 eine Begrenzung der Seitenkonturen 4 des Formkörpers 3.

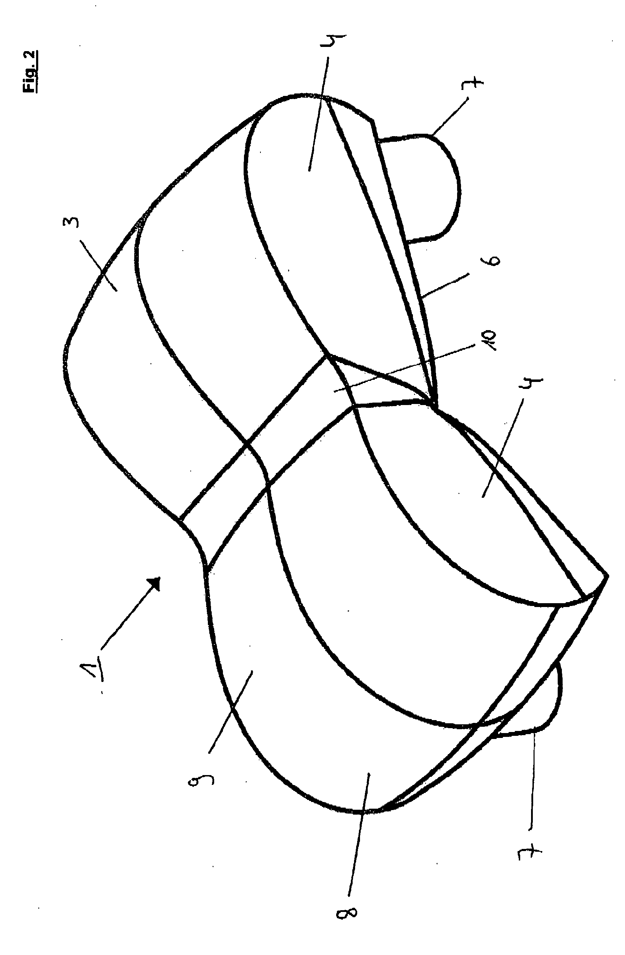

Figur 2 zeigt die erfindungsgemäße Lichtbrechungsvorrichtung 1 in einer perspektivischen Draufsicht. Dabei ist der parabolische Verlauf der Oberseite 9 als Sattelfläche für den Formkörper 3 zu erkennen, der an seinen radialen, randseitigen Begrenzungen jeweils eine konkave Krümmung 8 aufweist. Die konkave Krümmung 8 der Sattelfläche erstreckt sich bis zu dem Bereich des Überganges zur Unterseite 6 des Formkörpers 3. Die Sattelfläche des Formkörpers 3 ist durch eine Symmetrieebene 10 im Bereich des lokalen Minimums der parabelförmigen Ausgestaltung der Oberseite 9 des Formkörpers 3 gekennzeichnet. Die Sattelfläche des Formkörpers 3 zeigt insofern einen spiegelsymmetrischen Verlauf, wobei neben dem lokalen Minimum im Bereich der Symmetrieebene 10 der Sattelfläche der Oberseite 9 zwei lokale Maxima des parabelförmigen Verlaufes vorhanden sind, an die sich eine konkave Krümmung 8 an den Randflächen der Oberseite 9 des Formkörpers 3 anschließt. Weiterhin ist aus Figur 2 zu erkennen, dass die Oberseite 9 des Formkörpers 3 axial durch die Seitenkonturen 4 begrenzt wird. Die Seitenkonturen 4 sind begrenzt durch die Unterseite 6 des Formkörpers 3. Die Seitenkontur 4 spannt eine Fläche auf, die eine annähernd konkave Form aufweist und durch die Unterseite 6 des Formkörpers 3 und durch den parabolischen Verlauf der Oberseite 9 begrenzt ist. Weiterhin ist die Seitenkontur 4 des Formkörpers 3 im Bereich der Symmetrieebene 10 der Seitenkontur 4 verjüngt. Zudem ist aus der Figur 2 zu erkennen, dass auf der Unterseite 6 des Formkörpers 3 zwei Befestigungselemente 7 vorhanden sind, die diagonal an den einander gegenüberliegenden Eckpunkten der Unterseite 6 des Formkörpers 3 angeordnet sind. Die Befestigungselemente 7 sind zylindrisch ausgestaltet.

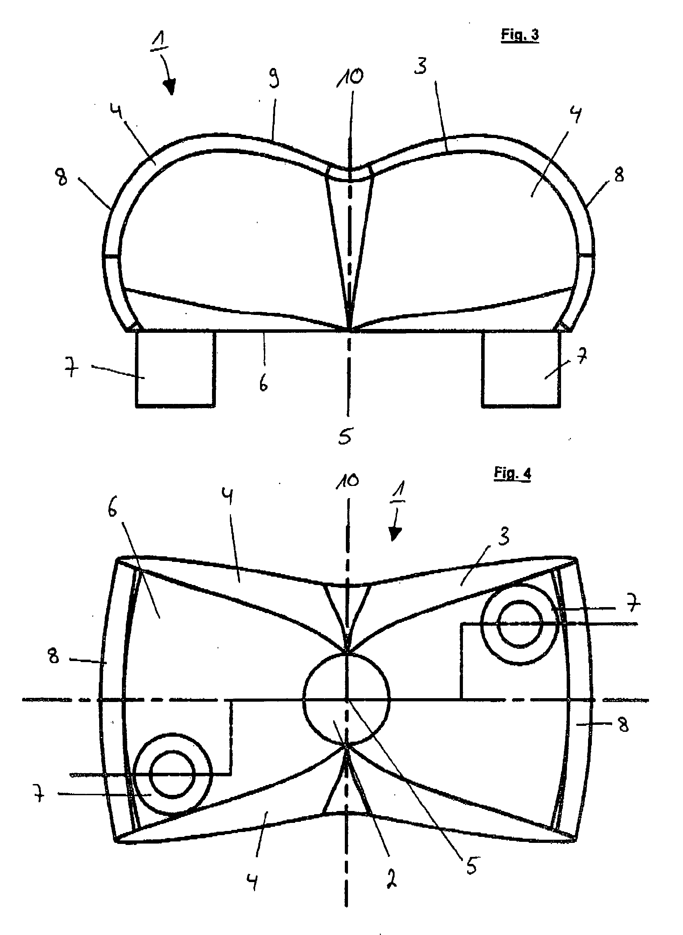

In Figur 3 ist die erfindungsgemäße Lichtstreuungsvorrichtung 1 in einer Seitenansicht dargestellt, bei der ein Formkörper 3 an seinen radialen Randflächen eine konkave Krümmung 8 aufweist. Im Bereich der Längsmittelachse 5, der Ausnehmung 2 für eine LED befindet sich ein lokales Minimum des parabolischen Kurvenverlaufs der Oberseite 9. Die Oberseite 9, die auch als Sattelfläche für den Formkörper 3 angesehen werden kann, ist im Bereich der Längsmittelachse 5 der Ausnehmung 2 für die LED- durch eine Symmetrieebene 10 in zwei spiegelsymmetrisch gleiche Bereich geteilt, sodass der annähernd parabolische Formkörper 3 zwei spiegelsymmetrische Hälften aufweist. Geht man von einem lokalen Minimum der Sattelfläche im Bereich der Längsmittelachse 5, der Ausnehmung 2 aus, so durchläuft die Oberfläche der Oberseite 9 in radialer Richtung einen Wendepunkt, der als lokales Maximum in Richtung auf der radialen Randfläche der Oberseite 9 zu bezeichnen ist und nach Erreichen des Wendepunktes in eine konkave Krümmung 8 übergeht. Die radiale Randfläche der Oberseite 9 wird begrenzt durch die horizontal verlaufende Unterseite 6 des Formkörpers 3 und die Seitenkontur 4 in axialer Richtung. An der Unterseite 6 des Formkörpers 3 sind zwei Befestigungselemente 7 zu erkennen, die mit der Unterseite 6 des Formkörpers 3 formschlüssig verbunden sind. Die Seitenkontur 4 weist einen parabelförmigen Verlauf in Richtung zur Oberseite 9 des Formkörpers 3 auf, wobei schematisch dargestellt ist, dass die Fläche der Seitenkontur 4 annähernd konkav ausgestaltet ist und ein lokales Maximum im Bereich der Längsmittelachse 5 der Ausnehmung für die Ausnehmung 2 des Formkörpers 3 aufweist.

Figur 4 zeigt die erfindungsgemäße Lichtstreuvorrichtung 1 in einer Unteransicht. Zur erkennen ist die Unterseite 6 des Formkörpers 3, mit der sich diagonal durch den Mittelpunkt der Längsmittelachse 5 der Ausnehmung 2 gegenüberliegenden Befestigungselementen 7. Die Befestigungselemente 7 sind dabei im vorliegenden Beispiel als zwei Kreise symbolisiert, die eine hohlzylindrische Form darstellen. Die Ausnehmung 2 ragt dabei in das Material des Formkörpers 3 hinein. Die konkrete Ausgestaltung der Ausnehmung richtet sich unter anderem nach der Form der LED, die in die Ausnehmung 2 platziert werden soll, wobei vorzugsweise jedoch eine konvex kegelstumpfförmige Ausnehmung 2 vorgesehen ist. Weiterhin ist in Figur 4 zu erkennen, dass der Formkörper 3 einander spiegelsymmetrisch gegenüberliegende Seitenkonturen 4 aufweist. Die Seitenkonturen 4 des Formkörpers 3 sind in Richtung auf die Längsmittelachse 5 der Ausnehmung 2 konkav gekrümmt, was bedeutet, dass sich die Randflächen der Seitenkonturen 4 in Richtung der Längsmittelachse 5 der Ausnehmung 2 verjüngen. Weiterhin ist aus Figur 4 zu erkennen, dass die radialen, randseitigen Bereiche des Formkörpers 3 als Begrenzung der Sattelfläche der Oberseite 9 bis an die Unterseite 6 des Formkörpers 3 heranreichen. Durch die konkave Krümmung 8 der Sattelfläche des Formkörpers 3 ragen die Scheitelpunkte der konkaven Krümmung 8 über die Begrenzungen der Fläche der Unterseite 6 hinaus. In axialer Richtung zeigt die Oberfläche der Unterseite 6 einen parabelförmigen Verlauf, die im Bereich senkrecht zur Längsmittelachse 5 Ausnehmung 2 eine Symmetrieebene 10 aufweist.

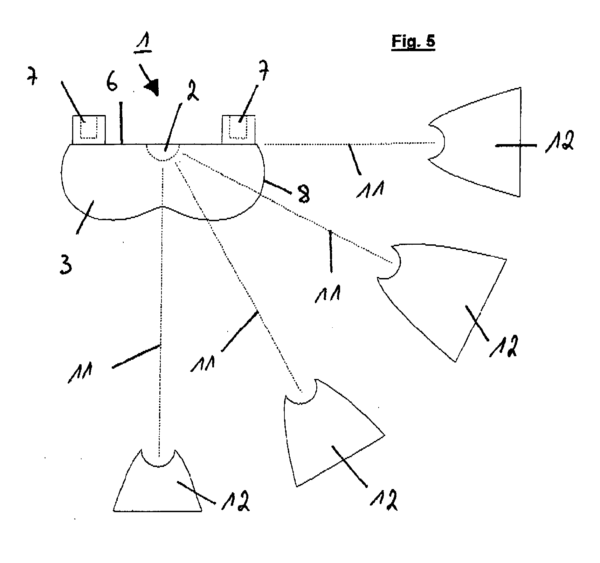

Figur 5 zeigt die erfindungsgemäße Lichtbrechvorrichtung 1 in einem Querschnitt mit schematisch angedeuteter Emission von Licht in eine auszuleuchtende Fläche. Zu erkennen sind die auf der Unterseite 6 des Formkörpers 3 vorhandene Befestigungselemente 7, die sich im lateralen Bereich der Unterseite 6 befinden und mit dem Formkörper 3 verbunden sind. Die Befestigungselemente 7 ragen über die Unterseite 6 des Formkörpers 3 hinaus und zeigen eine annähernd quadratische Form. Innerhalb der Befestigungselemente 7 ist schematisch ein rechteckiger Bereich zu erkennen, der eine Materialaussparung andeutet und mit dessen Hilfe eine Verbindung des Formkörpers 3 zu einer komplementären Oberfläche hergestellt werden kann. Weiterhin ist zu erkennen, dass der Formkörper 3 eine im Focus entlang der Längsmittelachse 5 des Formkörpers 3 angeordnete Ausnehmung 2 aufweist, die zur Aufnahme einer LED geeignet ist. Weiterhin ist schematisch angedeutet, dass eine Emission von Licht aus dem Bereich der Ausnehmung 2 in dem Formkörper hinein erfolgen kann. Ausgehend von einer Lichtquelle, wie einer LED, die in der Ausnehmung 2 angeordnet ist, gelangen dann Lichtstrahlen 11 an die Randflächen des Formkörpers 3 und werden dort so gebrochen, sodass eine anisotrope Auslenkung emittierten Lichts auf eine auszuleuchtende Fläche erfolgen kann. Dabei wird durch die spezielle Ausgestaltung des Formkörpers 3 gewährleistet, dass im Bereich der parabelförmigen konvexen Krümmung des Formkörpers 3 mehr Lichtstrahlen 11 austreten, als im Bereich der unmittelbar unterhalb der Längsmittelachse 5 des Formkörpers 3 befindlichen Fläche. Dadurch wird gewährleistet, dass die Beleuchtungsstärke auf einer auszuleuchtenden Fläche annährend homogen ist. Der Bereich des Formkörpers 3 durch den das Licht nach Aussendung von der LED innerhalb des Formkörpers 3 durchtreten muss, ist schematisch durch die unterschiedlich langen Ausschnitte 12 dargestellt. Man kann erkennen, dass das Licht in Bereichen entlang der Längsmittelachse 5 einen geringeren Teil des Formkörpers 3 durchdringen muss als im Bereich der Krümmung 8.

### Bezugszeichenliste

- 1: Lichtstreuvorrichtung
- 2: Ausnehmung
- 3: Formkörper
- 4: Seitenkontur
- 5: Längsmittelachse
- 6: Unterseite
- 7: Befestigungselemente
- 8: Krümmung
- 9: Oberseite
- 10: Symmetrieebene
- 11: Lichtstrahl
- 12: Ausschnitte

## Patentansprüche

1. Lichtbrechungsvorrichtung (1) für LED's zur Ausleuchtung einer Fläche, insbesondere eines Fluchtwegs, umfassend zumindest eine LED, die im Focus eines Formkörpers (3) aufgenommen, mit Spannung beaufschlagbar ist und Licht in den Formkörper (3) emittiert,
**dadurch gekennzeichnet,**
**dass** durch eine an den Randflächen des Formkörpers (3) auftretende Lichtbrechung eine homogene Ausleuchtung einer begrenzten, festlegbaren Fläche erfolgt und der Formkörper (3) eine Ausnehmung (2) für eine LED sowie spiegelsymmetrische Seitenkonturen (4) aufweist, welche zumindest teilweise parabolisch geformt sind.

2. Lichtbrechungsvorrichtung (1) nach Anspruch 1 oder 2,
**dadurch gekennzeichnet,**
**dass** die Seitenkonturen (4) gegenüber der Mittelachse der Ausnehmung (2) einen Neigungswinkel von 0° bis zu 85° aufweisen.

3. Lichtbrechungsvorrichtung (1) nach einem der vorherigen Ansprüche,
**dadurch gekennzeichnet**
**dass** die der LED gegenüberliegende Randfläche zumindest teilweise parabolisch ausgebildet ist, wobei der Scheitelpunkt der parabolischen Randfläche sich mit der Längsmittelachse (5) der LED schneidet und der Formkörper (3) an den Randflächen in eine konkave Krümmung übergeht.

4. Lichtbrechungsvorrichtung (1) nach einem der vorherigen Ansprüche,
**dadurch gekennzeichnet,**
**dass** die Randfläche des Formkörpers eine konvexe Krümmung aufweist.

5. Lichtbrechungsvorrichtung (1) nach einem der vorherigen Ansprüche,
**dadurch gekennzeichnet,**
**dass** eine Totalreflexion des Lichtes innerhalb des Formkörpers (3) ausgeschlossen und eine konvergente Anisotropie des Lichts in die auszuleuchtende Fläche durch Brechung an den Randflächen des Formkörpers (3) mit derselben Beleuchtungsstärke erfolgt.

6. Lichtbrechungsvorrichtung (1) nach einem der vorherigen Ansprüche,
**dadurch gekennzeichnet,**
**dass** die homogene Beleuchtungsstärke zwischen 1 bis 3 Lux liegt.

7. Lichtbrechungsvorrichtung (1) nach einem der vorherigen Ansprüche,
**dadurch gekennzeichnet,**
**dass** die radialen und tangentialen Winkel innerhalb des Formkörpers (3) in einem Verhältnis von Min./Max. von 1:40 stehen.

8. Lichtbrechungsvorrichtung (1) nach einem der vorherigen Ansprüche,
**dadurch gekennzeichnet**,
die Einfallswinkel des Lichtes innerhalb des Formkörpers (3) einen Wert von 42° nicht übersteigen.

9. Lichtbrechungsvorrichtung (1) nach einem der vorherigen Ansprüche,
**dadurch gekennzeichnet,**
**dass** die spiegelsymmetrischen Seitenkonturen (4) von der Mittelachse auf einen Wert von 2 x 90° ansteigen.

10. Lichtbrechungsvorrichtung (1) nach einem der vorherigen Ansprüche,
**dadurch gekennzeichnet,**
**dass** der Formkörper (3) und/oder die LED schwenkbar ausgebildet sind und manuell oder elektromotorisch einstellbar sind.

11. Lichtbrechungsvorrichtung (1) nach einem der vorherigen Ansprüche,
**dadurch gekennzeichnet,**
**dass** der Formkörper (3) aus einem polykristallinen oder amorphen Material besteht, insbesondere PMMA, Polycarbonat und/oder PAN.

12. Lichtbrechungsvorrichtung (1) nach einem der vorherigen Ansprüche,
**dadurch gekennzeichnet,**
**dass** die der LED abgewandte Unterseite (6) des Formkörpers (3) eben ist und mindestens einen Bereich zur Befestigung aufweist.

13. Lichtbrechungsvorrichtung (1) nach einem der vorherigen Ansprüche,
**dadurch gekennzeichnet,**
**dass** der Formkörper (3) mindestens ein Gewinde zur Befestigung der Lichtstreuvorrichtung aufweist.
